# EUROPÄISCHE PATENTANMELDUNG

(11) **EP 0 775 713 A2**
(43) Veröffentlichungstag der Anmeldung: **28.05.1997**
(21) Anmeldenummer: 96118089.0
(22) Anmeldetag: 12.11.1996
(51) Int. Cl.: C08F 210/06, C08F 4/658, C08F 2/34

(54) **Copolymerisate des Propylens mit C2-C10-Alk-1-enen**

(30) Priorität: 21.11.1995 DE 19543292
(71) Anmelder: BASF AKTIENGESELLSCHAFT, 67056 Ludwigshafen (DE)
(72) Erfinder: Kersting, Meinolf, Dr., 67435 Neustadt (DE); Müller, Patrik, Dr., 67661 Kaiserslautern (DE); Werner, Rainer Alexander, Dr., 67098 Bad Dürkheim (DE); Zolk, Ralf, Dr., 67256 Weisenheim (DE); Scherer, Günter, Dr., 67435 Neustadt (DE)

(57) **Zusammenfassung**

Copolymerisate des Propylens mit anderen C₂-C₁₀-Alk-1-enen, dadurch erhältlich, daß man aus der Gasphase heraus in einem bewegten Festbett bei einem Druck von 15 bis 40 bar, einer Temperatur von 50 bis 100°C und einer mittleren Verweilzeit des Reaktionsgemisches von 0,5 bis 5 Stunden, mit Hilfe eines Ziegler-Natta-Katalysatorsystems, das neben einer titanhaltigen Feststoffkomponente, die eine Verbindung des Titans, eine Verbindung des Magnesiums, ein Halogen, einen Träger und eine Elektronendonorkomponente enthält, eine Aluminiumkomponente und eine siliciumorganische Verbindung als weitere Elektronendonorkomponente aufweist, ein Gemisch aus Propylen und anderen C₂-C₁₀-Alk-1-enen polymerisiert, wobei man das Verhältnis der Partialdrücke zwischen Propylen und den anderen C₂-C₁₀-Alk-1-enen auf 5:1 bis 100:1 einstellt und als siliciumorganische Verbindung eine solche der allgemeinen Formel (II) verwendet,

R¹ₙSi(OR²)₄₋ₙ (II)

wobei
- R¹: eine 3- bis 8-gliedrige Cycloalkylgruppe,
- R²: eine C₁-C₈-Alkylgruppe bedeutet und
- n: für die Zahlen 1,2 oder 3 steht.

## Beschreibung

Die vorliegende Erfindung betrifft Copolymerisate des Propylens mit anderen C₂-C₁₀-Alk-1-enen, die dadurch erhältlich sind, daß man aus der Gasphase heraus in einem bewegten Festbett bei einem Druck von 15 bis 40 bar, einer Temperatur von 50 bis 100°C und einer mittleren Verweilzeit des Reaktionsgemisches von 0,5 bis 5 Stunden, mit Hilfe eines Ziegler-Natta-Katalysatorsystems,
das neben einer titanhaltigen Feststoffkomponente, die eine Verbindung des Titans, eine Verbindung des Magnesiums, ein Halogen, einen Träger und eine Elektronendonorkomponente enthält, eine Aluminiumkomponente und eine siliciumorganische Verbindung als weitere Elektronendonorkomponente aufweist, ein Gemisch aus Propylen und anderen C₂-C₁₀-Alk-1-enen polymerisiert, wobei man das Verhältnis der Partialdrücke zwischen Propylen und den anderen C₂-C₁₀-Alk-1-enen auf 5:1 bis 100:1 einstellt und als siliciumorganische Verbindung eine solche der allgemeinen Formel (II) verwendet,

R¹ₙSi(OR²)₄₋ₙ (II)

wobei
- R¹: eine 3- bis 8-gliedrige Cycloalkylgruppe,
- R²: eine C₁-C₈-Alkylgruppe bedeutet und
- n: für die Zahlen 1,2 oder 3 steht.

Weiterhin betrifft die vorliegende Erfindung ein Verfahren zur Herstellung dieser Copolymerisate sowie Folien, Fasern und Formkörper aus diesen Copolymerisaten.

Die Herstellung von Propylen-Copolymerisaten durch Ziegler-Natta-Polymerisation ist bereits häufig beschrieben worden. Die dabei verwendeten Katalysatorkomponenten enthalten u.a. Verbindungen des mehrwertigen Titans, Aluminiumhalogenide und/oder Alkyle, sowie Elektronendonorverbindungen, wobei meistens Silane, Ester, Ether, Ketone oder Lactone verwendet werden (EP-B 14 523, EP-B 45 977, EP-B 86 473, EP-A 171 200).

Des weiteren sind Verfahren zur Darstellung von Propylen-Ethylen-Block-copolymeren mit Hilfe eines Ziegler-Natta-Katalysatorsystems bekannt (US-A 4 454 299, US-A 4 455 405, ZA-B 0084/3561, ZA-B 0084/3563 ZA-B 0084/5261, GB-B 1 032 945), bei denen man zunächst gasförmiges Propylen in einer ersten Reaktionszone polymerisiert und das daraus erhältliche Homopolymerisat anschließend in eine zweite Reaktionszone bringt, wo ein Gemisch aus Ethylen und Propylen hinzupolymerisiert wird. Das Verfahren wird gewöhnlich bei erhöhtem Druck und in Anwesenheit von Wasserstoff als Molmassenregler durchgeführt. Die dabei erhältlichen Copolymerisate weisen meist eine ausgezeichnete Schlagzähigkeit auf, sind aber verfahrenstechnisch relativ aufwendig, da die Polymerisation in zwei hintereinandergeschalteten Reaktoren durchgeführt wird, die regeltechnisch aufeinander abgestimmt werden müssen.

In der US-A 4 260 710 wird ferner ein Verfahren beschrieben, bei der aus der Gasphase heraus Homo- und Copolymerisate von Alk-1-enen durch Polymerisation mit Hilfe von Ziegler-Natta-Katalysatoren in einem Rührkessel hergestellt werden. Mit Hilfe dieses dort beschriebenen Verfahrens lassen sich insbesondere Polypropylene mit einer hohen Stereospezifizität herstellen, wobei aber die Produktivität des Katalysators, die das Verhältnis zwischen der Menge an erhaltenen Polymeren zur eingesetzten Katalysatormenge angibt, noch verbesserungsfähig ist.

Weiterhin sind aus der DE-A 4011160 Copolymerisate des Propylens bekannt, die insbesondere durch abgesenkte Anteile von Chlor und von xylollöslichen Bestandteilen im Copolymerisat charakterisiert sind. Das zu ihrer Herstellung angewandte Verfahren ist technisch wenig aufwendig und zeichnet sich außerdem durch eine hohe Produktivität aus.

Für einige Anwendungsgebiete von Kunststoffen ist es aber notwendig, den Anteil an xylollöslichen Bestandteilen im Copolymerisat nochmals weiter abzusenken, so daß diese auch als Verpackungsmaterial im Lebensmittelbereich verwendet werden können. Darüber hinaus ist man auch aus wirtschaftlichen Gründen an einer weiteren Steigerung der Produktivität des eingesetzten Katalysatorsystems interessiert.

Der vorliegenden Erfindung lag daher die Aufgabe zugrunde, den geschilderten Nachteilen abzuhelfen und Copolymerisate des Propylens mit reduzierten xylollöslichen Anteilen zu entwickeln, die darüber hinaus nach einem Verfahren mit einer gesteigerten Produktivität hergestellt werden können.

Demgemäß wurden die eingangs definierten neuen Copolymerisate des Propylens entwickelt.

Das zu diesen Copolymerisaten führende Verfahren kann in den üblichen, für die Polymerisation von Propylen verwendeten Reaktoren entweder stufenweise oder bevorzugt kontinuierlich durchgeführt werden. Geeignete Reaktoren sind u.a. kontinuierlich betriebene Rührkessel, die ein Festbett aus feinteiligem Polymerisat, vorzugsweise aus Polypropylen enthalten, welches üblicherweise durch geeignete Rührvorrichtungen in Bewegung gehalten wird.

Die Polymerisation wird in einem bewegten Festbett in der Gasphase bei einem Druck von 15 bis 40 bar, einer Temperatur von 50 bis 100°C und einer mittleren Verweilzeit des Polymerisats von 0,5 bis bis 5 Stunden durchgeführt. Bevorzugt sind dabei Drücke von 15 bis 30 bar, Temperaturen von 65 bis 90°C und mittlere Verweilzeiten von 1,0 bis 3 Stunden. Durch geeignete Wahl der entsprechenden Reaktionsparameter sollte ferner darauf geachtet werden, daß im Polymerisationssystem pro mmol der Aluminiumkomponente des Ziegler-Natta-Katalysatorsystems 0,05 bis 2 kg, bevorzugt 0,1 bis 1,5 kg, Polypropylen gebildet werden.

Das Verfahren kann mit den in der Polymerisationstechnik üblichen Ziegler-Natta-Katalysatoren durchgeführt werden. Diese enthalten u.a. neben einer titanhaltigen Feststoffkomponente noch eine Aluminium- und eine siliciumorganische Verbindung als Elektronendonorkomponente.

Zur Herstellung der titanhaltigen Feststoffkomponente werden im allgemeinen Halogenide oder Alkoholate des drei- oder vierwertigen Titans verwendet, wobei die Chloride des Titans, insbesondere Titantetrachlorid, bevorzugt sind. Üblicherweise wird die titanhaltige Feststoffkomponente auf einem möglichst feinteiligen Träger aufgebracht, wobei sich Siliciumoxide, Aluminiumoxide, sowie Aluminiumsilicate der Bruttoformel SiO₂·aAl₂O₃, wobei a für einen Wert von 0,01 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m²/g auf.

Weitere Bestandteile der titanhaltigen Feststoffkomponente sind u.a. Verbindungen des Magnesiums. Als solche kommen neben Magnesiumhalogeniden, Magnesiumalkylen und Magnesiumarylen auch Magnesiumalkoxy- und Magnesiumaryloxyverbindungen in Betracht, wobei insbesondere Magnesiumdichlorid, Magnesiumdibromid und Magnesiumdi-(C₁-C₁₀-alkyl)-Verbindungen verwendet werden. Daneben enthält die titanhaltige Feststoffkomponente ein Halogen, bevorzugt Chlor oder Brom.

Neben den drei- oder vierwertigen Titanverbindungen, dem Träger, der Magnesiumverbindung und dem Halogen enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel (I) 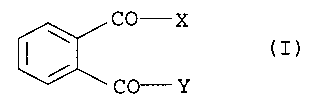 verwendet, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren sowie Monoester von gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁ bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 45 977, der EP-A 86 473, der US-A 4857613, der US-A 5288824 und der GB-A 2 111 066 beschrieben.

Bei der Herstellung der titanhaltigen Feststoffkomponente wird bevorzugt folgendes mehrstufige Verfahren angewandt.

In der ersten Stufe versetzt man zunächst einen feinteiligen Träger, bevorzugt Siliciumoxid oder SiO₂·aAl₂O₃ - wobei a für eine Zahl im Bereich von 0,01 und 2, insbesondere im Bereich von 0,01 und 0,5 steht -, mit einer Lösung einer magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, ein. Danach fügt man ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel I hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Die Lösung wird mindestens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der zweiten Stufe extrahiert man den aus der ersten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel mindestens 5 Gew.-% Titantetrachlorid enthält. Danach wäscht man das Produkt solange mit einem flüssigen Alkan, bis der Gehalt der Waschflüssigkeit an Titantetrachlorid geringer ist als 2 Gew.-%.

Als Aluminiumkomponente kommen neben Trialkylaluminium auch solche Verbindungen in Betracht, bei denen ein Alkylsubstituent durch eine Alkoxygruppe oder durch ein Halogen, wie Chlor oder Brom ersetzt ist. Bevorzugt werden Trialkylaluminiumverbindungen verwendet, deren Substituenten jeweils 1 bis 8 C-Atome aufweisen, beispielsweise Trimethyl-, Triethyl- oder Methyldiethylaluminium.

Neben der titanhaltigen Feststoffkomponente und der Aluminiumkomponente enthält das zur Herstellung der erfindungsgemäßen Copolymerisate des Propylens verwendete Ziegler-Natta-Katalysatorsystem noch eine siliciumorganische Verbindung der allgemeinen Formel (II)

R¹ₙSi(OR²)₄₋ₙ (II)

wobei
- R¹: eine 3- bis 8-gliedrige Cycloalkylgruppe,
- R²: eine C₁-C₈-Alkylgruppe bedeutet und
- n: für die Zahlen 1,2 oder 3 steht.

Bevorzugt sind dabei solche siliciumorganischen Verbindungen der allgemeinen Formel (II), wobei R¹ eine 5- bis 7-gliedrige Cycloalkylgruppe, R² eine C₁-C₄-Alkylgruppe bedeutet und n für die Zahl 2 steht.

Unter diesen Verbindungen sind insbesondere Dimethoxydicyclopentylsilan, Diethoxydicyclopentylsilan, Diisopropyloxydicyclopentylsilan, Diisobutyloxydicyclopentylsilan und Dimethoxydicyclohexylsilan hervorzuheben. Ganz besonders bevorzugt ist Dimethoxydicyclopentylsilan.

Wie alle anderen eingesetzten Katalysatorbestandteile sind auch diese siliciumorganischen Verbindungen der allgemeinen Formel (II) im Fachhandel erhältlich.

Bevorzugt werden solche Katalysatorsysteme verwendet, bei denen das Atomverhältnis zwischen Aluminium aus der Aluminiumkomponente und Titan aus der titanhaltigen Feststoffkomponente 10:1 bis 800:1, insbesondere 20:1 bis 200:1, und das Molverhältnis zwischen der Aluminiumkomponente und der Elektronendonorkomponente 1:1 bis 100:1, insbesondere 2:1 bis 80:1 beträgt. Die einzelnen Katalysatorbestandteile können in beliebiger Reihenfolge einzeln oder als Gemisch zweier Komponenten in das Polymerisationssystem eingebracht werden.

Mit diesem Ziegler-Natta-Katalysatorsystem polymerisiert man nach dem zu den erfindungsgemäßen Copolymerisaten führenden Verfahren ein Gemisch aus Propylen und anderen Alk-1-enen. Darunter werden C₂-C₁₀-Alk-1-ene, insbesondere Ethylen, But-1-en, Pent-1-en, Hex-1-en, Hept-1-en und Oct-1-en verstanden, wobei Ethylen und But-1-en bevorzugt werden. Zur Herstellung von speziellen Copolymerisaten kann auch ein Gemisch aus Ethylen und einem C₄-C₁₀-Alk-1-en verwendet werden, wobei in diesem Fall das Partialdruckverhältnis zwischen Ethylen und dem C₄-C₁₀-Alk-1-en auf 1:1 bis 100:1, insbesondere auf 2:1 bis 80:1 einzustellen ist.

Nach dem ebenfalls erfindungsgemäßen Verfahren zur Herstellung der Copolymerisate des Propylens ist es auch erforderlich, das Verhältnis der Partialdrücke zwischen Propylen und den anderen C₂-C₁₀-Alk-1-enen auf 5:1 bis 100:1, insbesondere auf 5:1 bis 80:1 einzustellen.

Die Molmasse der dabei erhältlichen Polymerisate kann wie üblich durch Zugabe von Reglern, insbesondere von Wasserstoff kontrolliert werden. Weiterhin ist es möglich, Inertgase wie Stickstoff oder Argon mitzuverwenden.

Die nach dem erfindungsgemäßen Verfahren erhältlichen Copolymerisate weisen eine statistische Monomerverteilung mit mittleren Molmassen von 10 000 bis 500 000 und Schmelzflußindices von 0,1 bis 100 g/10 min, vorzugsweise von 0,2 bis 10 g/10 min auf, jeweils gemessen nach DIN 53 735 genormten Prüfvorrichtung bei einer Temperatur von 230°C und unter einem Gewicht von 2,16 kg ausgepreßt wird. Die erfindungsgemäßen Copolymerisate des Propylens enthalten vorzugsweise 0,1 bis 10 Gew.-%, insbesondere 0,5 bis 7 Gew.-% einpolymerisierte C₂-C₁₀-Alk-1-ene. Das Verfahren ermöglicht die Herstellung von Copolymerisation des Propylens mit einer hohen Produktivität. Die dabei erhältlichen Copolymerisate enthalten nur geringe Mengen xylollöslicher Stoffe und zeichnen sich auch durch eine höhere Steifigkeit aus.

Aufgrund dieser Eigenschaften eignen sich solche Copolymerisate u.a. zur Herstellung von Folien für den Lebensmittelbereich, ferner von Rohren, Belägen, Fasern, Hohlkörpern, Spritzgußartikeln und von Formteilen für den Fahrzeugbau.

### Beispiele

Die Beispiele 1 bis 3 und die Vergleichsbeispiele A bis C wurden in einem vertikal gerührten Gasphasenreaktor mit einem Nutzvolumen von 800 1 in Anwesenheit von Wasserstoff als Molmassenregler durchgeführt. Der Reaktor enthielt ein bewegtes Festbett aus feinteiligem Polymerisat. Die Vergleichsbeispiele A bis C entsprechen dabei der Lehre der DE-A 40 111 60.

### Vergleichsbeispiel A

In den Gasphasenreaktor wurde bei einem Druck von 23 bar und einer Temperatur von 80°C in Anwesenheit von Wasserstoff als Molmassenregler ein gasförmiges Gemisch aus Propylen und Ethylen eingeleitet, wobei das Verhältnis zwischen dem Partialdruck des Propylens und dem des Ethylens 78:1 betrug. Dieses Gemisch wurde bei einer mittleren Verweilzeit von 1,5 Stunden mit Hilfe eines Ziegler-Natta-Katalysators kontinuierlich polymerisiert, wobei pro Stunde 10,8 g einer titanhaltigen Feststoffkomponente, 450 mol Triethylaluminium und 45 mmol Dimethoxyisobutylisopropylsilan als Katalysatorbestandteile verwendet wurden.

Nach Beendigung der Gasphasenpolymerisation erhielt man ein Propylen-Ethylen-Copolymerisat mit einem Schmelzfußindex von 2,7 g/10 min., bei 230°C und 2,16 kg (nach DIN 53 735). Der Gehalt an einpolymerisiertem Ethylen betrug 2,4 Gew.-%. Die Produktivität des Katalysators und die Gehalte an xylollöslichen Anteilen im erhaltenen Propylen-Ethylen-Copolymerisat können ebenso wie die Steifigkeit und der Schmelzfußindex der nachstehenden Tabelle entnommen werden.

Die titanhaltige Feststoffkomponente wurde nach folgendem Verfahren hergestellt:

Dazu versetzte man in einer ersten Stufe SiO₂, welches einen Teilchendurchmesser von 20 bis 45 µm, ein Porenvolumen von 1,75 cm³/g und eine Oberfläche von 320 m²/g aufwies, mit in n-Heptan gelöstem Butyl-octylmagnesium, wobei pro Mol SiO₂ 0,25 MOl der Magnesiumverbindung eingesetzt wurden. Die Reaktionsmischung wurde 1,5 Stunden lang bei 90°C gerührt, danach auf 20°C abgekühlt und anschließend wurde die 10-fache molare Menge, bezogen auf die magnesiumorganische Verbindung, an Chlorwasserstoff eingeleitet.

Danach fügte man unter ständigem Rühren 3 Molteile Ethanol, bezogen auf 1 Molteil Magnesium hinzu. Diese Lösung wurde 1,5 Stunden lang bei 80°C gerührt und anschließend mit 6 Molteilen Titantetrachlorid und 0,5 Molteilen Phthalsäuredi-n-butylester, jeweils bezogen auf 1 Molteil Magnesium, versetzt. Die Lösung wurde weitere zwei Stunden gerührt, und danach wurde der Feststoff von Lösungsmittel durch Absaugen getrennt.

Das daraus erhältliche Produkt extrahierte man zwei Stunden lang bei 125°C mit einer 15 gewichtsprozentigen Lösung von Titantetrachlorid in Ethylbenzol. Anschließend wurde der Feststoff durch Filtration vom Extraktionsmittel getrennt und solange mit n-Heptan gewaschen, bis dieses nur noch 0,3 Gew.-% Titantetrachlorid enthielt.

Die daraus resultierende titanhaltige Feststoffkomponente enthielt 3,1 Gew.-% Titan, 6,3 Gew.-% Magnesium und 24,8 Gew.% Chlor.

### Beispiel 1

Analog dem Vergleichsbeispiel A wurde ein Propylen-Ethylen-Copolymerisat hergestellt, wobei aber anstelle von 45 mmol Dimethoxyisobutylisopropylsilan 45 mmol Dimethoxydicyclopentylsilan verwendet wurden.

Das aus diesem Beispiel resultierende erfindungsgemäße Propylen-Ethylen-Copolymerisat enthielt 2,4 Gew.-% Ethylen.

Die Produktivität des eingesetzten Katalysatorsystems sowie die xylollöslichen Anteile, die Steifigkeit (G-Modul) und der Schmelzflußindex des erhaltenen Copolymerisats sind in der nachstehenden Tabelle aufgeführt.

### Vergleichsbeispiel B

Das Vergleichsbeispiel A wurde unter ansonsten analogen Bedingungen wiederholt, wobei aber das Verhältnis zwischen dem Partialdruck des Propylens und dem des Ethylens 35:1 betrug.

Das aus diesem Beispiel resultierende Propylen-Ethylen-Copolymerisat enthielt 3,4 Gew.-% Ethylen.

Die Produktivität des eingesetzten Katalysatorsystems sowie die xylollöslichen Anteile, die Steifigkeit (G-Modul) und der Schmelzfußindex des erhaltenen Copolymerisats sind in der nachstehenden Tabelle aufgeführt.

### Beispiel 2

Analog dem Vergleichsbeispiel B wurde ein Propylen-Ethylen-Copolymerisat hergestellt, wobei anstelle von 45 mmol Dimethoxyisobutylisopropylsilan 45 mmol Dimethoxydicyclopentylsilan verwendet wurden.

Das aus diesem Beispiel resultierende erfindungsgemäße Propylen-Ethylen-Copolymerisat enthielt 3,6 Gew.-% Ethylen.

Die Produktivität des eingesetzten Katalysatorsystems sowie die xylollöslichen Anteile, die Steifigkeit (G-Modul) und der Schmelzflußindex des erhaltenen Copolymerisats sind in der nachstehenden Tabelle aufgeführt.

### Vergleichsbeispiel C

Analog dem Vergleichsbeispiel A wurde in einem Gasphasenreaktor bei einem Druck von 20 bar, einer Temperatur von 70°C und einer mittleren Verweilzeit von 1,5 Stunden in Anwesenheit von Wasserstoff als Molmassenregler ein Gemisch aus Propylen, Ethylen und But-1-en kontinuierlich polymerisiert. Das Verhältnis der Partialdrücke zwischen Propylen, Ethylen und But-1-en lag dabei bei 20:1,0:0,9. Die Polymerisation erfolgte mit Hilfe eines Ziegler-Natta-Katalysatorsystems, wobei pro Stunde 9,6 g der titanhaltigen Feststoffkomponente, 450 mmol Triethylaluminium und 45 mmol Dimethoxyisobutylisopropylsilan als Katalysatorbestandteile verwendet wurden.

Das aus diesem Vergleichsbeispiel resultierende Propylen-Ethylen-But-1-en-Copolymerisat enthielt 3,9 Gew.-% Ethylen und 2,0 Gew.-% But-1-en.

Die Produktivität des eingesetzten Katalysatorsystems sowie die Eigenschaften des erhaltenen Copolymerisats sind in der nachstehenden Tabelle ausgeführt.

### Beispiel 3

Analog dem Vergleichsbeispiel C wurde ein Propylen-Ethylen-But-1-en-Copolymerisat hergestellt, wobei anstelle von 45 mmol Dimethoxyisobutylisopropylsilan 45 mmol Dimethoxydicyclopentylsilan verwendet wurden.

Das aus diesem Beispiel resultierende erfindungsgemäße Propylen-Ethylen-But-1-en-Copolymerisat enthielt 4,0 Gew.-% Ethylen und 1,9 Gew.-% But-1-en.

Die Produktivität des eingesetzten Katalysatorsystems sowie die xylollöslichen Anteile, die Steifigkeit (G-Modul) und der Schmelzflußindex des erhaltenen Copolymerisats sind in der nachstehenden Tabelle aufgeführt.

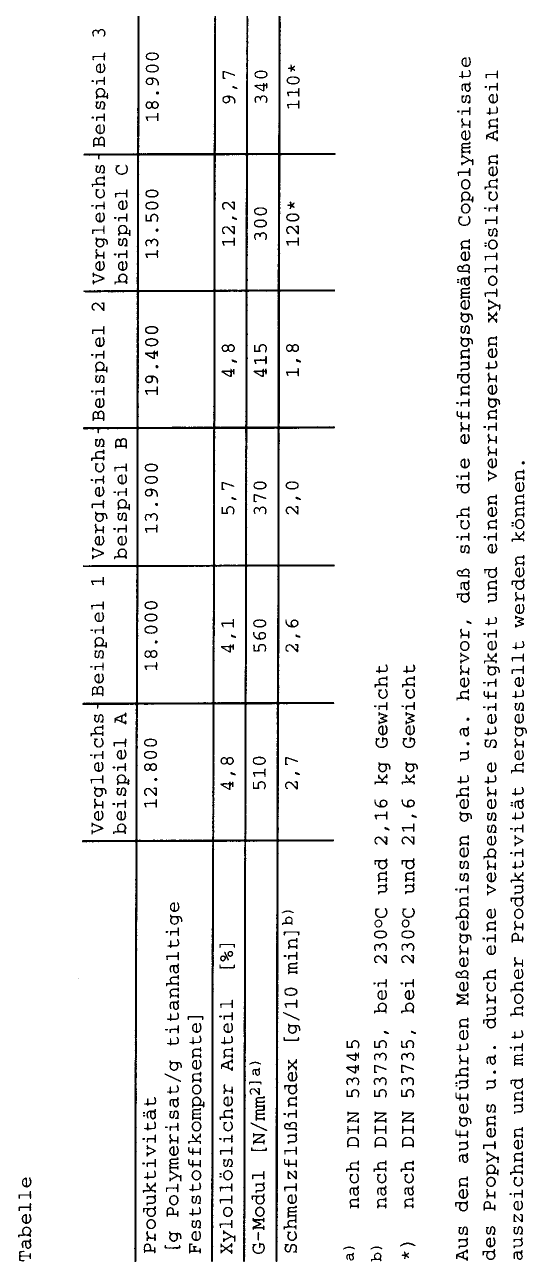

## Patentansprüche

1. Copolymerisate des Propylens mit anderen C₂-C₁₀-Alk-1-enen, dadurch erhältlich, daß man aus der Gasphase heraus in einem bewegten Festbett bei einem Druck von 15 bis 40 bar, einer Temperatur von 50 bis 100°C und einer mittleren Verweilzeit des Reaktionsgemisches von 0,5 bis 5 Stunden, mit Hilfe eines Ziegler-Natta-Katalysatorsystems, das neben einer titanhaltigen Feststoffkomponente, die eine Verbindung des Titans, eine Verbindung des Magnesiums, ein Halogen, einen Träger und eine Elektronendonorkomponente enthält, eine Aluminiumkomponente und eine siliciumorganische Verbindung als weitere Elektronendonorkomponente aufweist, ein Gemisch aus Propylen und anderen C₂-C₁₀-Alk-1-enen polymerisiert, wobei man das Verhältnis der Partialdrücke zwischen Propylen und den anderen C₂-C₁₀-Alk-1-enen auf 5:1 bis 100:1 einstellt und als siliciumorganische Verbindung eine solche der allgemeinen Formel (II) verwendet,
R¹ₙSi(OR²)₄₋ₙ (II)
wobei
R¹ eine 3- bis 8-gliedrige Cycloalkylgruppe,
R² eine C₁-C₈-Alkylgruppe bedeutet und
n für die Zahlen 1,2 oder 3 steht.

2. Copolymerisate nach Anspruch 1, wobei als siliciumorganische Verbindung eine solche der allgemeinen Formel (II) verwendet wird, in der R¹ eine 5- bis 7-gliedrige Cycloalkylgruppe, R² eine C₁-C₄-Alkylgruppe bedeutet und n für die Zahl n steht.

3. Copolymerisate nach Anspruch 2, wobei als siliciumorganische Verbindung Dimethoxydicyclopentylsilan verwendet wird.

4. Copolymerisate nach einem der Ansprüche 1 bis 3, wobei als C₂-C₁₀-Alk-1-en Ethylen eingesetzt wird.

5. Copolymerisate nach einem der Ansprüche 1 bis 3, wobei als C₂-C₁₀-Alk-1-en But-1-en eingesetzt wird.

6. Copolymerisate nach einem der Ansprüche 1 bis 3, wobei als C₂-C₁₀-Alk-1-en ein Gemisch aus Ethylen und But-1-en eingesetzt wird.

7. Verfahren zur Herstellung von Copolymerisaten des Propylens mit anderen C₂-C₁₀-Alk-1-enen, wobei man aus der Gasphase heraus in einem bewegten Festbett bei einem Druck von 15 bis 40 bar, einer Temperatur von 50 bis 100°C und einer mittleren Verweilzeit des Reaktionsgemisches von 0,5 bis 5 Stunden, mit Hilfe eines Ziegler-Natta-Katalysatorsystems, das neben einer titanhaltigen Feststoffkomponente, die eine Verbindung des Titans, eine Verbindung des Magnesiums, ein Halogen, einen Träger und eine Elektronendonorkomponente enthält, eine Aluminiumkomponente und eine siliciumorganische Verbindung als weitere Elektronendonorkomponente aufweist, ein Gemisch aus Propylen und anderen C₂-C₁₀-Alk-1-enen polymerisiert, wobei man das Verhältnis der Partialdrücke zwischen Propylen und den anderen C₂-C₁₀-Alk-1-enen auf 5:1 bis 100:1 einstellt, dadurch gekennzeichnet, daß man als siliciumorganische Verbindung eine solche der allgemeinen Formel (II) verwendet,
R¹ₙSi(OR²)₄₋ₙ (II)
wobei
R¹ eine 3- bis 8-gliedrige Cycloalkylgruppe,
R² eine C₁-C₈-Alkylgruppe bedeutet und n für die Zahlen 1, 2 oder 3 steht.

8. Verfahren nach Anspruch 7, dadurch gekennzeichnet, daß man die mittlere Verweilzeit der Reaktionsgemisches auf 1,0 bis 3 Stunden einstellt.

9. Verwendung der Copolymerisate gemäß einem der Ansprüche 1 bis 6 zur Herstellung von Folien, Fasern und Formkörper.

10. Folien, Fasern und Formkörper aus den Copolymerisaten gemäß den Ansprüchen 1 bis 6.
